# FASCICULE DE BREVET EUROPEEN

(11) **EP 1 459 103 B1**
(45) Date de publication et mention de la délivrance du brevet: **20.11.2013**
(21) Numéro de dépôt: 02801129.4
(22) Date de dépôt: 12.12.2002
(51) Int. Cl.: G01V 1/047

(54) **SYSTEME D'EMISSION SISMIQUE MOBILE A DISPOSITIFS DE COUPLAGE FIXES, ET METHODE POUR SA MISE EN OEUVRE**
MOBILES SEISMISCHES EMISSIONSSYSTEM MIT FIXEN KOPPLUNGSVORRICHTUNGEN UND METHODE DAFÜR
MOBILE SYSTEM FOR SEISMIC EMISSION WITH FIXED COUPLING DEVICES, AND METHOD THEREFOR

(30) Priorité: 21.12.2001 FR 0116652
(43) Date de publication de la demande: 22.09.2004
(73) Titulaire: Institut Français du Pétrole, 92852 Rueil-Malmaison Cedex (FR); CGGVERITAS SERVICES SA, 91341 Massy Cedex (FR); GDF SUEZ, 92400 Courbevoie (FR)
(72) Inventeur: MEYNIER, Patrick, F-78400 Chatou (FR); BARONI, Axelle, F-92500 Rueil-Malmaison (FR)
(74) Mandataire: Schmitt, Nicolas A.J.
(86) Numéro de dépôt international: PCT/FR2002/004331
(87) Numéro de publication internationale: WO 2003/056361

(56) Documents cités:
- US-A- 3 504 756
- US-A- 4 850 449
- US-A- 5 360 951
- BLAIR D P: "SOIL-EMBEDDED DETECTOR MOUNTS FOR SEISMIC MONITORING" GEOPHYSICS, SOCIETY OF EXPLORATION GEOPHYSICISTS. TULSA, US, vol. 60, no. 1, 1995, pages 120-133, XP000507556 ISSN: 0016-8033

## Description

La présente invention concerne un système d'émission sismique dans une formation souterraine utilisant une source déplaçable successivement en une pluralité d'emplacements d'activation préparés et une méthode pour sa mise en oeuvre.

Un tel système d'émission trouve des applications notamment dans le cadre d'opérations sismiques où l'on forme des images sismiques d'une formation souterraine à explorer à partir d'ondes élastiques captées par des récepteurs sismiques appropriés, ces ondes étant renvoyées par les discontinuités du sous-sol en réponse à des ondes émises par une source telle qu'un vibrateur électromécanique.

Le système selon l'invention, est plus particulièrement utile dans le cadre d'opérations de surveillance à long terme d'un gisement souterrain en cours d'exploitation, (un réservoir de stockage de fluides par exemple ou un gisement pétrolier), dites de sismique répétitive, où l'on compare des images sismiques du sous-sol obtenues à intervalles réguliers de façon à déceler les modifications qui ont pu s'y produire suite à l'exploitation. Il s'agit d'opérations de longue durée car les variations à observer sont relativement lentes.

### Etat de la technique

La reconnaissance sismique d'un gisement souterrain s'opère d'une façon générale en couplant avec le sol des sources sismiques et des récepteurs, suivant différentes combinaisons où les sources et/ou les récepteurs sont disposés à la surface ou à son voisinage ou dans un ou plusieurs puits au travers de la formation explorée. On réalise des séries de cycles d'émission-réception sismique en changeant à chaque fois l'emplacement de la source sismique par rapport à l'axe du puits où les ensembles de récepteurs sont installés, suivant une technique dite de "walk-away", et en enregistrant les arrivées aux récepteurs R1 à Rn en fonction du temps de propagation t.

Les sources sismiques utilisées sont le plus souvent des vibrateurs électromécaniques : électro-hydrauliques, piézoélectriques, etc. Des vibrateurs de type piézoélectriques sont décrits par exemple dans le brevet FR 2.791.180 ou le brevet US 5 360 951.

La surveillance de l'évolution des gisements nécessite généralement des opérations sismiques de surveillance espacées dans le temps. Dans la pratique, il faut réinstaller l'équipement sismique de surface à chaque nouvelle séance d'enregistrement sismique, et, de préférence, reproduire les conditions d'émission des opérations sismiques précédentes.

Une méthode connue de surveillance d'un gisement d'hydrocarbures ou d'un réservoir souterrain de fluide comporte l'utilisation d'un système de surveillance comprenant des antennes de réception formées par interconnexion de récepteurs sismiques, installées à demeure respectivement dans des trous de faible profondeur, avec des moyens de connexion sur lesquels peuvent se brancher des câbles de connexion à un laboratoire sismique, et un camion vibrateur que l'on déplace sur le terrain.

L'utilisation d'une source mobile telle qu'un vibrateur présente des inconvénients surtout dans le cadre d'une surveillance périodique d'un réservoir de stockage souterrain. Avec une source déplaçable, on ne peut assurer une reproductibilité suffisante dans le temps des ondes sismiques émises. Il est très difficile de positionner la source exactement aux mêmes endroits que celles qu'elle occupait lors des cycles précédents d'émission-réception précédents, et, dans l'hypothèse où ce lieu serait exactement le même, d'obtenir que son coefficient de couplage avec le sol y soit tout à fait le même. Cela constitue une contrainte et une sujétion, pour l'exploitant des sites (généralement encombrés) qui doit faciliter son évolution, encore plus grande si la source utilisée doit être déclenchée sensiblement aux mêmes emplacements que lors des cycles d'émission-réception précédents.

Par le brevet FR 2 728 973 (US 5 724 311), on connaît une méthode et un dispositif de surveillance sismique permanente d'une formation souterraine Dans le cadre d'opérations de surveillance régulière à long terme d'une zone souterraine, on installe un dispositif d'émission-réception sismique à poste fixe sur le site d'exploitation, de façon à retrouver d'une fois sur l'autre des conditions opératoires stables : emplacements identiques d'émission-réception, qualité de couplage identique avec les terrains etc. Le dispositif comporte une pluralité de sources sismiques (des vibrateurs électromécaniques par exemple) à des emplacements fixes en surface ou bien enterrées à faible profondeur, que l'on alimente et on déclenche par une station centrale de commande et d'enregistrement. Les sources sismiques et le réseau de liaison peuvent être enterrés ou bien encore installés de façon permanente en surface, et associée à au moins un ensemble de récepteurs qui est couplé en permanence avec le sol en surface ou bien avec la paroi d'un moins un puits traversant la zone souterraine. Grâce à cet ensemble de sources à poste fixe dont le couplage avec les terrains environnant reste stable, et à ce réseau d'alimentation au moins en partie enterré dont l'aire d'emprise en surface est réduite, on peut mener toute une série d'opérations sismiques de surveillance dans des conditions opératoires stables, sans risque d'incompatibilité avec les activités du chantier d'exploitation.

Par le brevet FR 2.728.973 (US 5,724,311), on connaît un autre dispositif de surveillance sismique permanente d'une formation souterraine au moyen d'un ou plusieurs ensembles d'émission-réception sismique comportant chacun une source telle qu'un vibrateur et une antenne réceptrice formée d'une pluralité des récepteurs d'ondes élastiques tels que des géophones et/ou des hydrophones descendus dans un puits et couplés avec la formation. La source sismique est disposée dans une cavité, voisine de l'emplacement de l'antenne, ou formée par élargissement de la section de ce puits dans sa partie supérieure. Les récepteurs et la source sont reliés à une station extérieure de commande et d'acquisition de signaux. Les opérations de mise en place de ces ensembles sont relativement simples et la zone d'emprise au sol des différents puits est réduite ce qui facilite leur intégration sur des chantiers d'exploitation de gisements.

Grâce à cet ensemble de sources à poste fixe facilement intégrables sur les chantiers d'exploitation de gisements ou de stockage de fluides et dont la qualité de couplage avec les terrains environnant est connue et stable, on peut mener toute une série d'opérations sismiques de surveillance dans des conditions opératoires similaires. Les jeux de traces sismiques peuvent être utilement comparées et leurs différences sont bien significatives des changements survenus dans les formations, et non des perturbations liées par exemple aux variations climatiques.

Cependant, la mise en oeuvre des opérations de surveillance rend nécessaire le couplage à poste fixe d'un nombre souvent important de sources sismiques, ce qui rend l'installation de surveillance relativement coûteuse.

### Le système d'émission et la méthode selon l'invention

Le système d'émission sismique selon l'invention permet d'émettre des ondes sismiques dans une formation souterraine en une pluralité d'emplacements d'activation préparés, dans des conditions excellentes de reproductibilité.

Il est caractérisé en ce qu'il comporte en chacun de ces emplacements, un dispositif de couplage comprenant au moins un élément d'ancrage étroitement couplé avec la formation à une certaine profondeur et au moins un élément de transmission solidaire de l'élément d'ancrage, et au moins une source sismique déplaçable successivement en ces différents emplacements et pourvue de moyens de verrouillage rapide à l'élément de transmission.

Suivant un premier mode de réalisation, le dispositif de couplage avec la formation comporte par exemple au moins deux éléments d'ancrage enfouis dans le sol (à des profondeurs différentes par exemple), chacun d'eux étant relié par les éléments de transmission à la source sismique située en surface ou à son voisinage.

Le dispositif de couplage comporte par exemple un premier élément de transmission associé à l'élément d'ancrage le plus proche de la surface, et un deuxième élément de transmission, le premier élément de transmission entourant le deuxième élément de transmission et étant associé à une première extrémité au deuxième élément d'ancrage le plus profondément enfoui, la source sismique étant en opération rigidement reliée aux deux éléments de transmission.

Le premier élément de transmission est par exemple tubulaire, la source sismique reposant sur son extrémité opposée par l'intermédiaire d'un siège.

Suivant un deuxième mode de réalisation, le dispositif de couplage avec la formation comporte un élément d'ancrage enfoui à une certaine profondeur, la source sismique étant couplée en fonctionnement avec l'élément de transmission solidaire de cet élément d'ancrage, et en appui sur le sol directement ou par l'intermédiaire d'éléments d'appui.

Le système peut comporter au moins un cuvelage isolant les éléments de transmission de la formation.

Les éléments de verrouillage sont par exemple accessibles dans une fosse, aménagée dans le sol à chaque emplacement, dans laquelle la source sismique est placée en opération, la surface d'appui sur laquelle repose la source sismique, étant soit à l'intérieur ou à l'extérieur de la fosse.

Suivant un mode de réalisation, la source sismique est un vibrateur de type piézoélectrique, électromagnétique, électrohydraulique ou magnétostrictif.

Dans le cas où la source sismique est un vibrateur piézoélectrique, celui-ci comporte par exemple un moteur entre une plaque en appui sur le sol et une plaque opposée adaptée, en opération, à être verrouillée à l'élément de transmission.

La source sismique peut être intégrée à un véhicule muni de moyens de manoeuvre pour sa mise en place et son couplage ou bien encore transportée par un véhicule indépendant.

Suivant un mode de réalisation, le système comporte également au moins une source sismique installée à poste fixe en un emplacement équipé d'un dispositif de couplage.

La méthode de prospection ou de surveillance sismique d'une formation souterraine selon l'invention comporte la mise en place d'un ensemble de récepteurs sismiques et leur couplage avec la formation. Elle est caractérisée en ce qu'elle comporte :
- l'installation sur le terrain en une pluralité d'emplacements déterminés, d'au moins un dispositif de couplage comprenant au moins un élément d'ancrage étroitement couplé avec la formation à une certaine profondeur et au moins un élément de transmission solidaire de l'élément d'ancrage ;
- le déplacement d'au moins une source sismique successivement en ces différents emplacements et son verrouillage avec les éléments de transmission du dispositif de couplage correspondant ; et
- en chacun des dits emplacements, le déclenchement de la source sismique et l'acquisition des données sismiques captées par les récepteurs sismiques en réponse aux signaux sismiques appliqués à la formation par la source sismique.

La méthode peut comporter également l'installation également d'au moins une source sismique à poste fixe en un des dits emplacements prédéterminés équipés d'un dispositif de couplage.

La mise en place du système d'émission à poste fixe se réduit, dans sa phase initiale, à des opérations d'ancrage des dispositifs de couplage aux différents emplacements d'émission envisagés. Avec un seul vibrateur sismique facilement déplaçable, dont le couplage avec la formation aux emplacements successifs est stable et reproductible du fait des dispositifs d'ancrage préalablement installés, il est possible de procéder à des opérations sismiques complètes, alors qu'auparavant il fallait autant de vibrateurs que d'emplacements d'émission : le système constitue de ce fait une alternative économiquement rentable aux dispositifs classiques.

### Présentation succincte des figures

Les caractéristiques et avantages du système d'émission et de la méthode selon l'invention, apparaîtront plus clairement à la lecture de la description ci-après d'exemples non limitatifs de réalisation, en se référant aux dessins annexés où :
- la Fig.1 montre schématiquement un premier mode de réalisation du dispositif de couplage ;
- la Fig.2 montre schématiquement un deuxième mode de réalisation du dispositif de couplage ; et
- la Fig.3 montre schématiquement un exemple de mise en oeuvre du système d'émission avec ancrage d'un vibrateur déplaçable successivement aux emplacements d'ancrage préparés.

### DESCRIPTION DETAILLEE

Le système d'émission comporte un ensemble de dispositifs de couplage 1 pré-installés sur le terrain à des emplacements choisis convenant pour la surveillance de la formation souterraine.

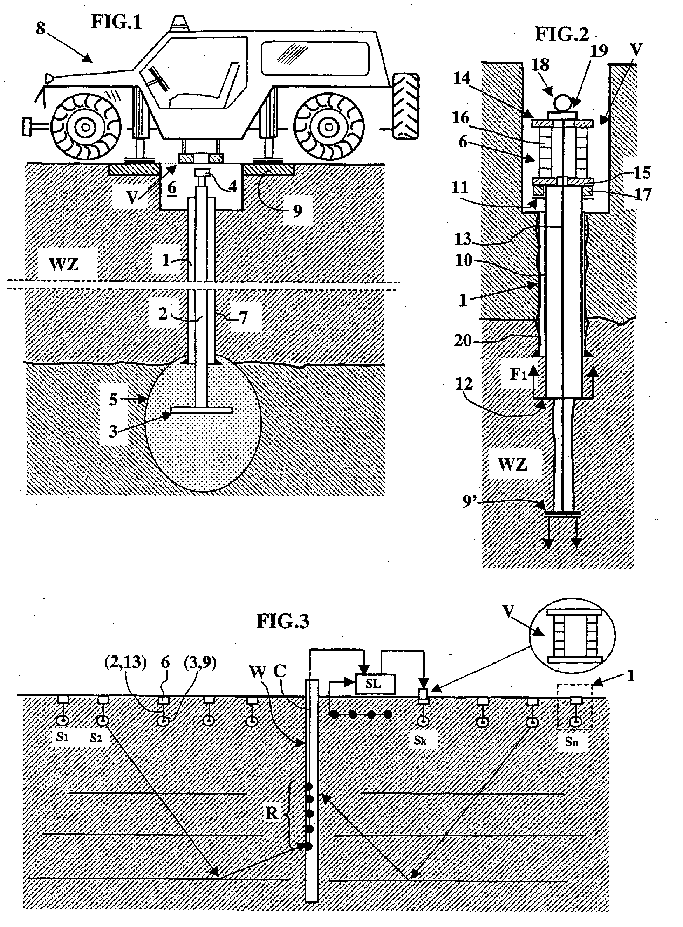

Suivant le mode de réalisation de la Fig.1, chaque dispositif de couplage 1 comporte essentiellement un élément de transmission 2 tel qu'une tige ou tendon, solidaire d'un élément de couplage ou pavillon 3 ancré dans le sol, et disposant d'une tête de verrouillage 4 permettant une connexion rapide à une source sismique telle qu'un vibrateur V par exemple. Le pavillon 3 est couplé avec le terrain à une certaine profondeur, sous la zone dite altérée (WZ) de préférence. A cet effet, on crée une cavité 5 dans laquelle on descend le pavillon associé à sa tige 2, et on cimente le pavillon 3 pour le coupler avec la formation environnante. La cavité 5 est reliée à une fosse 6 creusée en surface, par un puits pourvu d'un cuvelage 7. Le vibrateur V est descendu dans la fosse 6 et connecté à la tête de verrouillage 4 de la tige 2. Le vibrateur V prend un second point d'appui sur le sol, par l'intermédiaire d'une embase de couplage fixe 9, telle qu'une plaque annulaire disposée autour de la fosse 6.

Le vibrateur sismique V peut être transporté d'un emplacement d'ancrage à un autre par un véhicule indépendant et déposé dans la fosse 6 pour y être couplé avec le dispositif 1. Il peut également être intégré à un véhicule 8, muni de moyens de manoeuvre (non représentés) permettant de passer d'une position haute de transport à une position basse de fonctionnement. dans ce cas, le véhicule prend appui sur l'embase de couplage 9. On amène alors le vibrateur V dans la position basse et on le verrouille sur la tête 4 de la tige 2 du dispositif de couplage 1.

Suivant le mode de réalisation de la Fig.2, le dispositif comporte deux éléments de couplage tels que des plaques 9', 12, enterrés à des profondeurs différentes (au-dessous de la zone altérée dite WZ de préférence). La source sismique repose par un collet de couplage 11 placé sur la partie supérieure d'un élément de transmission tubulaire 10 (ci-après tube). A sa base, celui-ci est fixé à la plaque de couplage supérieure 12. A l'intérieur du tube 10, passe un autre élément de transmission 13 tel qu'une tige ou un câble par exemple, solidaire de la plaque de couplage inférieure 9 à une première extrémité et relié au moyen d'une tête de verrouillage rapide 18, à la source sismique V à son extrémité opposée. La source sismique V transmet donc les ondes uniquement par l'intermédiaire des deux plaques enterrées 9', 12 (et éventuellement du tube 10 et du câble 13, s'ils sont en contact avec la formation). Le tube 10 et le câble 13 peuvent également être découplés des formations adjacentes par un cuvelage 20. Le puits foré débouche également dans une fosse 6, servant de protection à la tête de verrouillage rapide 18 et au vibrateur V.

Le vibrateur V peut être de type piézoélectrique, électromagnétique, électrohydraulique, ou encore magnétostrictif. Un vibrateur de type piézoélectrique comprend par exemple (Fig.2) deux plaques 14, 15 entre lesquelles sont intercalés plusieurs piliers cylindriques 16 réalisés par empilement de disques piézoélectriques, ou bien éventuellement un pilier unique réalisé par empilement d'éléments piézoélectriques annulaires. La plaque inférieure 15 est pourvue d'un prolongement tubulaire 17 adapté à venir en appui contre le collet 11 terminant le tube 10 à sa partie supérieure. Les deux plaques 14, 15 sont pourvues d'une ouverture centrale permettant le libre passage de la tige ou câble 13. Un moyen de connexion rapide 19 d'un type connu est utilisé pour solidariser la tige 13 (via la tête de verrouillage 18) avec la plaque supérieure 14 du vibrateur V.

### Mise en oeuvre

Le dispositif de mise en oeuvre des opérations de surveillance sismique d'une formation souterraine comporte (Fig. 3) un ensemble de dispositifs d'ancrage 1 tels que, par exemple, ceux décrits précédemment, répartis sur le terrain et au moins un ensemble de récepteurs sismiques R installés à demeure, au contact de la zone surveillée. Cet ensemble de récepteurs R peut être installé dans un puits W, qu'il s'agisse d'un puits d'exploration ou d'un puits d'exploitation de la zone surveillée, à l'extérieur d'un tubing de production de la manière décrite dans le brevet FR 2 674 029 (US 5 243 562), de façon à le laisser libre pour d'autres activités ; il peut aussi être enfoui dans le sol, au voisinage de la surface. L'ensemble de récepteurs R est connecté à une station centrale de commande et d'enregistrement SL par l'intermédiaire de câbles de liaison C.

Le vibrateur V est successivement transporté aux différents emplacements des dispositifs de couplage 1, descendu dans la fosse 6 et verrouillé aux systèmes d'ancrage, de façon à être couplé avec le terrain par l'intermédiaire des éléments 3, 9, 9' et 12, précédemment décrits. Une fois le vibrateur V verrouillé à un dispositif d'ancrage 1, on peut procéder aux opérations sismiques avec déclenchement du vibrateur et enregistrement des signaux sismiques reçus par les récepteurs R en réponse aux ondes émises. Ensuite, il est désolidarisé du dispositif de couplage et transporté vers l'emplacement d'un autre dispositif de couplage et ainsi de suite.

Les opérations sont facilitées si l'on dispose d'un véhicule, tel que celui de la Fig.1, muni d'organes de manoeuvre pour assurer le verrouillage du vibrateur V (qui lui est intégré dans ce cas) aux éléments de transmission situés dans chaque fosse 6.

On a décrit des modes de réalisation où la ou chaque source sismique mobile utilisée est un vibrateur. Il est bien évident cependant que le vibrateur peut être remplacé par tout autre type de source sismique et par exemple par une source impulsionnelle.

On a décrit aussi une mise en oeuvre où l'on procédait aux opérations de surveillance de la formation au moyen d'une ou plusieurs sources mobiles susceptibles d'être ancrées en différents emplacements d'ancrage aménagés avec un dispositif d'ancrage 1. On ne sortirait pas du cadre de l'invention toutefois en combinant avec ce système d'émission déplaçable, un dispositif d'émission fixe où une ou plusieurs sources sismiques sont installées à demeure en un certain nombre d'emplacements équipés d'un dispositif d'ancrage 1 tel que celui qui a été décrit.

## Revendications

1. Système d'exploration ou de surveillance sismique pour la surveillance sismique périodique d'une formation souterraine, comprenant des moyens d'émission de signaux sismiques, ancrables dans la formation par fixation des moyens d'ancrage étroitement couplés avec la formation à une certaine profondeur et des moyens de réception de signaux provenant de la formation, en réponse aux signaux sismiques émis, ***caractérisé en ce que*** les moyens d'ancrage comportent une pluralité de dispositifs de couplage (1), chacun d'eux étant préinstallé en un emplacement d'une série d'emplacements choisis au-dessus de la formation souterraine et les moyens d'émission comportent au moins une source sismique mobile (V) déplaçable successivement en ces différents emplacements et pourvue de moyens de verrouillage pour solidariser la source sismique successivement aux différents dispositifs de couplage,
chaque dispositif de couplage avec la formation comportant au moins deux éléments d'ancrage enfouis dans le sol (9', 12) chacun d'eux étant relié par des éléments de transmission à la source sismique située en surface ou à son voisinage.

2. Système selon la revendication 1, **caractérisé en ce qu'**il comporte un premier et un deuxième élément d'ancrage (12, 9') enfouis à des profondeurs différentes, un premier élément de transmission (10) associé à l'élément d'ancrage (12) le plus proche de la surface, et un deuxième élément de transmission (13), le premier élément de transmission (10) entourant le deuxième élément de transmission (13) et étant associé à une première extrémité au deuxième élément d'ancrage (9') le plus profondément enfoui, la source sismique étant en opération rigidement reliée aux deux éléments de transmission (10, 13).

3. Système selon la revendication 2, **caractérisé en ce que** le premier élément de transmission (10) est tubulaire, la source sismique reposant sur son extrémité opposée par l'intermédiaire d'un siège (17).

4. Système selon la revendication 1, **caractérisé en ce que** la source sismique est en appui sur le sol directement ou par l'intermédiaire d'éléments d'appui (9).

5. Système selon l'une des revendications précédentes, **caractérisé en ce que** les éléments de transmission (2, 10, 13) sont isolés de la formation par au moins un cuvelage (20).

6. Système selon l'une des revendications précédentes, **caractérisé en ce que** les éléments de verrouillage rapides sont accessibles dans une fosse (6), aménagée dans le sol à chaque emplacement (S), dans laquelle la source sismique (V) est placée en opération.

7. Système selon la revendication 4 et 6, **caractérisé en ce que** la surface d'appui sur laquelle repose la source sismique (V), est à l'intérieur ou à l'extérieur de la fosse (6).

8. Système selon l'une des revendications précédentes, **caractérisé en ce que** la source sismique (V) est un vibrateur de type piézoélectrique, électromagnétique, électrohydraulique ou magnétostrictif.

9. Système selon l'une des revendications 1 à 7, **caractérisé en ce que** la source sismique (V) est un vibrateur comportant un moteur (16) entre une plaque (15) en appui sur le sol et une plaque opposée (14) adaptée, en opération, à être verrouillée à l'élément de transmission (2).

10. Système selon l'une des revendications précédentes, **caractérisé en ce que** la source sismique (V) est intégrée à un véhicule (8) muni de moyens de manoeuvre pour sa mise en place et son couplage.

11. Système selon l'une des revendications 1 à 7, **caractérisé en ce que** la source sismique (V) est transportée par un véhicule indépendant de celle-ci.

12. Système selon l'une des revendications précédentes, **caractérisé en ce qu'**il comporte au moins une source sismique installée à poste fixe en un emplacement équipé d'un dispositif de couplage (1).

13. Méthode pour l'exploration ou la surveillance sismique périodique d'une formation souterraine, comportant la mise en place d'un ensemble de récepteurs sismiques (R) et leur couplage avec la formation, et l'ancrage d'une source sismique avec la formation par fixation à des moyens d'ancrage étroitement couplés avec la formation à une certaine profondeur, ***caractérisée en ce qu'**elle comporte :*
- l'installation sur le terrain, en chaque emplacement d'une pluralité d'emplacements déterminés dominant la formation souterraine, d'au moins un dispositif de couplage (1) comprenant au moins un élément d'ancrage (3, 9, 9', 12) étroitement couplé avec la formation à une certaine profondeur et au moins un élément de liaison (2, 10, 13) solidaire de l'élément d'ancrage ;
- le déplacement d'au moins une source sismique, (V) successivement à différents de ces différents emplacements et son verrouillage avec les éléments de liaison du dispositif de couplage (1) correspondant ; et
- en chacun des dits emplacements, le déclenchement de la source sismique et l'acquisition des données sismiques captés par les récepteurs sismiques (R) en réponse aux signaux sismiques appliqués à la formation par la source sismique (V).

14. Méthode selon la revendication précédente, **caractérisée en ce qu'**elle comporte l'intégration de la dite source sismique (V) à un véhicule (8) muni de moyens de manoeuvre pour sa mise en place et son couplage et le déplacement.

15. Méthode selon la revendication 13, **caractérisée en ce qu'**elle comporte le déplacement de la source sismique (V) entre les emplacements successifs, la dépose de la source sismique hors du véhicule et son couplage avec l'élément de liaison de chaque dispositif de couplage.

16. Méthode selon l'une des revendications précédentes, **caractérisée en ce qu'**elle comporte l'installation d'au moins une source sismique (V) à poste fixe en un des dits emplacements prédéterminés équipés d'un dispositif de couplage (1),

## Patentansprüche

1. System zur Erkundung oder zur seismischen Überwachung für die periodische seismische Überwachung einer unterirdischen Formation, das Mittel zum Senden seismischer Signale, die in der Formation durch Befestigung der Verankerungsmittel, die in einer gewissen Tiefe eng an die Formation gekoppelt sind, verankerbar sind, und Mittel zum Empfang von Signalen umfasst, die als Reaktion auf die gesendeten seismischen Signale von der Formation stammen, **dadurch gekennzeichnet, dass** die Verankerungsmittel mehrere Kopplungsvorrichtungen (1) umfassen, von denen jede im Voraus an einer Stelle von einer Reihe von ausgewählten Stellen über der unterirdischen Formation angebracht ist, und die Sendemittel mindestens eine bewegliche seismische Quelle (V) umfassen, die aufeinanderfolgend an diese unterschiedlichen Stellen verschoben werden kann und mit Verriegelungsmitteln versehen ist, um die seismische Quelle aufeinanderfolgend fest mit den unterschiedlichen Kopplungsvorrichtungen zu verbinden, wobei jede Vorrichtung zur Kopplung mit der Formation mindestens zwei Verankerungselemente umfasst, die im Boden (9', 12) eingegraben sind und von denen jedes durch Übertragungselemente mit der seismischen Quelle verbunden ist, die sich an der Oberfläche oder in ihrer Nähe befindet.

2. System nach Anspruch 1, **dadurch gekennzeichnet, dass** es ein erstes und ein zweites Verankerungselement (12, 9'), die in unterschiedlichen Tiefen eingegraben sind, ein erstes Übertragungselement (10), das mit dem Verankerungselement (12) verbunden ist, das am Nächsten an der Oberfläche liegt, und ein zweites Übertragungselement (13) umfasst, wobei das erste Übertragungselement (10) das zweite Übertragungselement (13) umgibt und an einem ersten Ende mit dem zweiten Verankerungselement (9') verbunden ist, das am tiefsten eingegraben ist, wobei die seismische Quelle während des Betriebs starr mit den zwei Übertragungselementen (10, 13) verbunden ist.

3. System nach Anspruch 2, **dadurch gekennzeichnet, dass** das erste Übertragungselement (10) röhrenförmig ist, wobei die seismische Quelle auf ihrem entgegengesetzten Ende über einem Sitz (17) ruht.

4. System nach Anspruch 1, **dadurch gekennzeichnet, dass** die seismische Quelle direkt oder über Auflagerelemente (9) auf dem Boden aufliegt.

5. System nach einem der vorhergehenden Ansprüche, **dadurch gekennzeichnet, dass** die Übertragungselemente (2, 10, 13) durch mindestens einen Schachtausbau (20) von der Formation isoliert sind.

6. System nach einem der vorhergehenden Anspruch, **dadurch gekennzeichnet, dass** die Schnellverriegelungsmittel in einem Schacht (6) zugänglich sind, der im Boden an jeder Stelle (S) eingerichtet ist, in der die seismische Quelle (V) während des Betriebs untergebracht ist.

7. System nach Anspruch 4 und 6, **dadurch gekennzeichnet, dass** die Auflagerfläche, auf der die seismische Quelle (V) ruht, sich innerhalb oder außerhalb des Schachts (6) befindet.

8. System nach einem der vorhergehenden Ansprüche, **dadurch gekennzeichnet, dass** die seismische Quelle (V) ein Vibrator des piezoelektrischen, elektromagnetischen, elektrohydraulischen oder magnetostriktiven Typs ist.

9. System nach einem der Ansprüche 1 bis 7, **dadurch gekennzeichnet, dass** die seismische Quelle (V) ein Vibrator ist, der einen Motor (16) zwischen einer Platte (15), die auf dem Boden aufliegt, und einer entgegengesetzten Platte (14) umfasst, die angepasst ist, um während des Betriebs am Übertragungselement (2) verriegelt zu sein.

10. System nach einem der vorhergehenden Ansprüche, **dadurch gekennzeichnet dass** die seismische Quelle (V) in ein Fahrzeug (8) integriert ist, das mit Manövriermittteln für sein Instellungbringen und seine Kopplung versehen ist.

11. System nach einem der Ansprüche 1 bis 7, **dadurch gekennzeichnet, dass** die seismische Quelle (V) durch ein Fahrzeug transportiert wird, das von ihr unabhängig ist.

12. System nach einem der vorhergehenden Ansprüche, **dadurch gekennzeichnet, dass** es mindestens eine seismische Quelle umfasst, die an einer festen Station an einer Stelle eingerichtet ist, die mit einer Kopplungsvorrichtung (1) ausgerüstet ist.

13. Verfahren zum Erkunden oder zur periodischen seismischen Überwachung einer unterirdischen Formation, das das Instellungbringen einer Gruppe von seismischen Empfängern (R) und ihr Koppeln mit der Formation und das Verankern einer seismischen Quelle mit der Formation durch Befestigung an Verankerungsmitteln umfasst, die in einer gewissen Tiefe eng an die Formation gekoppelt sind, **dadurch gekennzeichnet, dass** es Folgendes umfasst:
- Einrichten von mindestens einer Kopplungsvorrichtung (1), die mindestens ein Verankerungselement (3, 9, 9', 12), das in einer gewissen Tiefe eng mit der Formation gekoppelt ist, und mindestens ein Verbindungselement (2, 10, 13) umfasst, das fest mit dem Verankerungselement verbunden ist, auf dem Gelände an jeder Stelle von mehreren bestimmten Stellen, die die unterirdische Formation beherrschen;
- Verschieben von mindestens einer seismischen Quelle (V) aufeinanderfolgend an verschiedene dieser verschiedene Stellen und ihr Verriegeln mit den Verbindungselementen der entsprechenden Kopplungsvorrichtung (1); und
- an jeder der Stellen das Auslösen der seismischen Quelle und das Erfassen der seismischen Daten, die durch die seismischen Empfänger (R) als Reaktion auf die seismischen Signale aufgefangen werden, die durch die seismische Quelle (V) auf die Formation angewandt werden.

14. Verfahren nach dem vorhergehenden Anspruch, **dadurch gekennzeichnet, dass** es das Integrieren der seismischen Quelle (V) in ein Fahrzeug (8) umfasst, das mit Manövriermitteln für ihre Instellungbringung und ihre Kopplung und die Verschiebung umfasst.

15. Verfahren nach Anspruch 13, **dadurch gekennzeichnet, dass** es das Verschieben der seismischen Quelle (V) zwischen den aufeinanderfolgenden Stellen, das Abladen der seismischen Quelle aus dem Fahrzeug und ihr Koppeln mit dem Verbindungselement von jeder Kopplungsvorrichtung umfasst.

16. Verfahren nach einem der vorhergehenden Ansprüche, **dadurch gekennzeichnet, dass** es das Einrichten von mindestens einer seismischen Quelle (V) mit fester Station an einer der vorbestimmten Stellen umfasst, die mit einer Kopplungsvorrichtung (1) ausgerüstet sind.

## Claims

1. A seismic exploration or monitoring system for periodic seismic monitoring of an underground formation, comprising seismic signal emission means anchorable in the formation by fastening to anchor means tightly coupled with the formation at a certain depth and reception means for signals coming from the formation in response to the seismic signals emitted, **characterized in that** the anchor means comprise a plurality of coupling devices (1), each one being preinstalled at a location of a series of locations selected above the underground formation and the emission means comprise at least one mobile seismic source (V) movable successively between these various locations and provided with locking means for securing the seismic source successively to the various coupling devices, each coupling device intended for coupling with the formation comprising at least two anchor elements buried in the ground (9', 12), each one being connected by transmission elements to the seismic source arranged at the surface or in the vicinity thereof.

2. A system as claimed in claim 1, **characterized in that** it comprises a first and a second anchor element (12, 9') buried at different depths, a first transmission element (10) associated with the anchor element (12) that is the closest to the surface, and a second transmission element (13), first transmission element (10) surrounding second transmission element (13) and being associated with a first end of second anchor element (9') having the greatest depth of burial, the seismic source being tightly connected during operation to the two transmission elements (10, 13).

3. A system as claimed in claim 2, **characterized in that** first transmission element (10) is tubular, the seismic source resting on the opposite end thereof by means of a seat (17).

4. A system as claimed in claim 1, **characterized in that** the seismic source rests on the ground directly or by means of supporting elements (9).

5. A system as claimed in any one of the previous claims, **characterized in that** transmission elements (2, 10, 13) are insulated from the formation by at least one casing (20).

6. A system as claimed in any one of the previous claims, **characterized in that** the fast locking means are accessible in a pit (6) provided in the ground at each location (S) wherein seismic source (V) is operated.

7. A system as claimed in claims 4 and 6, **characterized in that** the supporting surface on which seismic source (V) rests is inside or outside pit (6).

8. A system as claimed in any one of the previous claims, **characterized in that** seismic source (V) is a vibrator of piezoelectric, electromagnetic, electrohydraulic or magnetostrictive type.

9. A system as claimed in any one of claims 1 to 7, **characterized in that** seismic source (V) is a vibrator comprising a motor (16) between a plate (15) resting on the ground and an opposite plate (14) suited to be secured to transmission element (2) during operation.

10. A system as claimed in any one of the previous claims, **characterized in that** seismic source (V) is integrated in a vehicle (8) provided with operating means for setting and coupling thereof.

11. A system as claimed in any one of claims 1 to 7, **characterized in that** seismic source (V) is transported by a vehicle independent of the source.

12. A system as claimed in any one of the previous claims, **characterized in that** it comprises at least one seismic source permanently installed at a location equipped with a coupling device (1).

13. A method for periodic seismic exploration or monitoring of an underground formation, comprising setting an array of seismic receivers (R) and coupling thereof with the formation, and anchoring a seismic source with the formation by fastening to anchor means tightly coupled with the formation at a certain depth, **characterized in that** it comprises:
- setting in the field, at each location of a plurality of predetermined locations above the underground formation, at least one coupling device (1) comprising at least one anchor element (3, 9, 9', 12) tightly coupled with the formation at a certain depth and at least one transmission element (2, 10, 13) secured to the anchor element,
- moving at least one seismic source (V) successively between these various locations and securing it to the transmission elements of the corresponding coupling device (1), and
- at each of said locations, triggering the seismic source and acquiring the seismic data picked up by seismic receivers (R) in response to the seismic signals applied to the formation by seismic source (V).

14. A method as claimed in the previous claim, **characterized in that** it comprises integrating said seismic source (V) to a vehicle (8) provided with operating means for setting, coupling and moving thereof.

15. A method as claimed in claim 13, **characterized in that** it comprises moving seismic source (V) between the successive locations, taking the seismic source out of the vehicle and coupling it with the transmission element of each coupling device.

16. A method as claimed in any one of the previous claims, **characterized in that** it comprises setting at least one seismic source (V) permanently at one of said predetermined locations equipped with a coupling device (1).
